# EUROPEAN PATENT APPLICATION

(11) **EP 3 543 027 A1**
(43) Date of publication of application: **25.09.2019**
(21) Application number: 19170293.5
(22) Date of filing: 11.07.2016
(51) Int. Cl.: B41M 1/00, B41M 3/00, B41M 7/00, B41M 3/14, G02B 3/00

(54) **A METHOD FOR PRODUCING A PATTERN IN OR ON A SUPPORT**

(30) Priority: 10.07.2015 GB 201512120
(62) Divisional of application: 16741380.6
(71) Applicant: De La Rue International Limited, Basingstoke, Hampshire RG22 4BS (GB)
(72) Inventor: HOLMES, Brian William, Hampshire GU51 5HZ (GB); GODFREY, John, London SW12 9LX (GB)
(74) Representative: Gill Jennings & Every LLP

(57) **Abstract**

A method of applying a pattern formed of at least two different materials to a pattern support layer is provided. The method comprises the steps of: a) providing a die form, the die form having a surface comprising a plurality of recesses defining the pattern; b) applying a first curable material to the surface of the die form such that said first curable material is received in a first set of the plurality of recesses; and applying a second curable material to the surface of the die form such that said second curable material is received in a second set of the plurality of recesses; c) bringing a pattern support layer in contact with the surface of the die form such that it covers at least some of the first set of the plurality of recesses and at least some of the second set of the plurality of recesses; and d) separating the pattern support layer from the surface of the die form such that the first curable material and second curable material in the covered recesses are removed from said recesses and retained on the pattern support layer in accordance with the pattern; the method further comprising the step of b') curing, at least partly, the first curable material and the second curable material in one or more steps during and/or after step b).

## Description

### Field of the Invention

The present invention is directed to a method for forming a pattern in or on a support. Such methods are used especially for the production of security elements on security documents or for later application to security documents. In particular, these security elements use patterns, especially micropatterns, to generate optical effects that are difficult to counterfeit such as lenticular effects, moire magnification effects, and integral imaging effects.

### Description of the Related Art

Methods are known for generating patterns or micropatterns on a substrate. US 2009/0297805 A1 and WO 2011/102800 A1 disclose methods of forming micropatterns in which a die form or matrix is provided whose surface comprises a plurality of recesses. The recesses are filled with a curable material, a treated substrate layer is made to cover the recesses of the matrix, the material is cured to fix it to the treated surface of the substrate layer, and the material is removed from the recesses by separating the substrate layer from the matrix.

Another method of forming a micropattern is disclosed in WO 2014/070079 A1. Here it is taught that a matrix is provided whose surface comprises a plurality of recesses, the recesses are filled with a curable material, and a curable pickup layer is made to cover the recesses of the matrix. The curable pickup layer and the curable material are cured, fixing them together, and the pickup later is separated from the matrix, removing the material from the recesses. The pickup layer is, at some point during or after this process, transferred onto a substrate layer so that the pattern is provided on the substrate layer.

In all of the above methods, the result is a substrate having a pattern of material formed on one surface. These patterns are suitable for use with arrays of focussing elements to produce optical effects such as lenticular effects, moire magnification effects, and integral imaging effects. These optical effects provide a mechanism for checking the authenticity of a document, and are difficult to replicate for attempted counterfeiters.

It is a continuing objective in the art to produce security documents whose optical effects are more impressive and thereby provide a more visually striking mechanism for authentication. Improvements which make such optical effects more visually impressive will also typically make it more difficult to produce a convincing counterfeit of a security document exhibiting said optical effect. One way to make the above optical effects more visually striking is to form the pattern of multiple colours. US 2009/0297805 A1 teaches that it is possible to form a pattern of multiple colours by applying a first pattern to a substrate as taught above, and then, at a downstream location, applying a second pattern in a second colour using the same method used to apply the first pattern.

Forming a multi-coloured pattern by separate, successive application steps leads to difficulties in achieving precise register between the patterns needed to form a single, coherent, multi-coloured pattern, and so it is desirable to provide an improved method of applying a pattern formed of at least two different materials to a substrate.

### Summary of Invention

In accordance with a first aspect of the present invention, there is provided a method of applying a pattern formed of at least two different materials to a pattern support layer comprising the steps of a) providing a die form, the die form having a surface comprising a plurality of recesses defining the pattern; b) applying a first curable material to the surface of the die form such that said first curable material is received in a first set of the plurality of recesses; and applying a second curable material to the surface of the die form such that said second curable material is received in a second set of the plurality of recesses; c) bringing a pattern support layer in contact with the surface of the die form such that it covers at least some of the first set of the plurality of recesses and at least some of the second set of the plurality of recesses; and d) separating the pattern support layer from the surface of the die form such that the first curable material and second curable material in the covered recesses are removed from said recesses and retained on the pattern support layer in accordance with the pattern; the method further comprising the step of b') curing, at least partly, the first curable material and the second curable material in one or more steps during and/or after step b).

The above outlined method allows for a single multi-material pattern to be formed on a pattern support layer using only a single application of material shaped in accordance with the pattern on a single die form. It will be appreciated that by applying a pattern formed from multiple materials using a single die form, register inaccuracies present in the prior art which result from the need line the second half of a pattern on a second die form up with the first half of a pattern applied to a substrate by a first die form are removed entirely. For example, the above method provides that a first material may be provided to a region of the die form such that it fills all the recesses in that region i.e. the first set of recesses. A second material may then be applied substantially all over the die form, with the second material only filling the unfilled recesses i.e. the second set of recesses. The result is a die form containing a pattern formed of two materials automatically in register, and hence, once the material is transferred to the pattern support layer, the multi-material pattern is produced with the different materials automatically in register with one another.

It will be appreciated that the term "die form" is intended to cover any solid having a surface into which recesses may be incorporated in accordance with a desired pattern.

The method includes applying a first curable material to the surface of the die form such that it is received in a first set of the plurality of recesses. It will be appreciated that applying the first curable material may comprise applying the material to the surface of the die form over a continuous area such that it is received in all the recesses within that continuous area, or that applying the first curable material may comprise applying the material in accordance with a more complex design which includes one or more regions of the first material. An example of the latter may be the application of the first material in accordance with a first colour component of a multi-coloured image for example a multi-coloured halftone image in the form of a multi-coloured dot matrix design.

The method also includes applying a second curable material to the surface of the die form such that it is received in a second set of the plurality of recesses (the second set being different from the first set). Applying the second material may comprise applying the second material over the already filled recesses, for example, substantially all over the surface of the die form, with the second material being received only in the recesses which have not received the first curable material. Alternatively, the second material may be applied to a continuous area abutting or offset from the area to which the first curable material was applied. In yet other examples, the second material may be applied in accordance with a more complex design which complements the application of the first material. For example, continuing the above example in which the first colour is applied in accordance with a first colour component of a multi-coloured dot matrix design, the second material may be applied in accordance with a second colour component of the multi-coloured dot matrix design, the result being a plurality of laterally offset dots of two different materials over the surface of the die form which may give the impression of a multi-coloured image.

Once the first and second materials are received in the recesses of the die form, a pattern support layer is brought into contact with the surface of the die form such that it covers at least some of the first set of the plurality of recesses and at least some of the second set of the plurality of recesses. The term "pattern support layer" is intended to cover any substrate suitable for removing from the recesses and retaining thereon some of the first and second curable material, which includes the pickup layers known in the art. The pattern support layer may be a single, continuous layer, either regular in shape or applied in accordance with a desired outline, or alternatively may be a layer broken up into a plurality of separate support regions and applied at a plurality of locations on the surface of the die form.

The pattern support layer is then separated from the surface of the die form. The separation of the pattern support layer may comprise peeling the pattern support layer from the surface of the die form such that the first and second material is gradually removed from the recesses across the surface of the die form, however any mechanism of separating the pattern support layer from the die form such that the first and second curable materials are removed from the recesses and retained on the pattern support layer is intended to be covered.

The method also includes curing the first and second curable materials. The curing of the first and second materials increases their viscosity, and preferably renders them substantially solid, such that they are retained on the pattern support layer in accordance with the pattern defined by the recesses of the die form. This curing of the first and second materials may occur in a single step which partially or fully cures both materials, or may involve multiple curing steps. When multiple curing steps are used, they may be used to cure, partially or fully, only one material at a time, or may involve one or more steps of partially curing one or more of the materials separately, in addition to a step of partial curing of both materials together.

These one or more curing steps may occur any time after application of at least one of the materials. If only one curing step is to be used, then the curing step must occur after application of both the first and second curable materials, but may occur before, during or after any of the remaining steps. Where multiple curing steps are used, they may occur in any number of steps before, during or after the steps following the application of both materials, and in addition, may include one or more curing steps for the first material before or during a subsequent application of the second material.

Thus, the first curable material is applied to a first area of the surface of the die form such that the first material is received in a first set of the plurality of recesses. In some cases, the first area will define the first set of the plurality of recesses or, in other words, the first set of the plurality of recesses will be those recesses located within the first area. The first area will typically be only a partial area of the surface of the die form, such that some recesses are intentionally unfilled by the first curable material. The second curable material may then be applied to a second area of the surface of the die form such the second material is received in a second set of the plurality of recesses, wherein the first and second areas are different. In some cases, the second area will define the second set of the plurality of recesses. However, in other cases, the second area may, for example, overlap the first area, in which case the second set of recesses may be only those recesses in the second area which are not also in the first area.

The first and second areas may be laterally offset with respect to one another. The term "laterally offset" should be understood to mean that one area may partially overlap, abut, or be offset or spaced from the other area.

In preferable embodiments of the invention, the method further includes the step of b") removing from the surface of the die form substantially all of the first curable material and/or the second curable material not in the first or second sets of the plurality of recesses in one or more steps during and/or after step b), but before step c).

In these embodiments, excess material is removed from the surface of the die form following the application of the first and/or second curable materials. It will be appreciated that in applying material to the surface of the die form, it is likely that not all of the material will be received in the recesses, and it will therefore be desirable to remove this extra material. Removal of the material not in the recesses may be performed in one or more steps after application of at least one of the materials, and may be performed before, during or after curing of the material. Removing the excess material may be performed, for example, by a doctoring blade or doctoring surface, such as a sacrificial web or cleaning roller.

In particularly preferable embodiments, the die form is a substantially cylindrical roller. In these embodiments, the recesses are formed in the surface of the cylindrical roller or in a plate attached to a cylindrical roller. Typically, in embodiments that feature a die form in the form of a cylindrical roller, the materials will be applied to the surface of the roller as the roller rotates, with the rotation of the roller being used to then bring the filled recesses in contact with the pattern support layer and then separate the surface of the die form from the pattern support layer such that the material is removed from the recesses and retained on the pattern support layer in accordance with the method. While a cylindrical roller is preferable, other embodiments are foreseen in which the die form is a substantially flat, or curved plate, or is provided in the form of a continuous track.

In some embodiments, applying the first curable material to the surface of the die form is performed before applying the second curable material to the surface of the die form. That is to say, one material is applied before the other material. In these embodiments, it is particularly preferable that step b) comprises in order: b) i) applying a first curable material to the surface of the die form such that said first curable material is received in a first set of the plurality of recesses; b") i) removing from the surface of the die form substantially all of the first curable material not in the first set of the plurality of recesses; b') i) curing, at least partly, the first curable material; b) ii) applying a second curable material to the surface of the die form such that said second curable material is received in a second set of the plurality of recesses; b") ii) removing from the surface of the die form substantially all of the second curable material not in the second set of the plurality of recesses; b') ii) curing, at least partly, the second curable material. Applying a first material, removing excess, then curing before repeating for a second material has been found to be a particularly preferable way of applying material directly to the die form. By curing before application of a second material, the mixing of the materials is reduced or prevented resulting in a particularly good final multi-material pattern. While it is preferable that material is removed before curing in the above, it is also possible that the first material is cured and then excess removed before the same is done for the second material.

Further, in embodiments in which the first material is applied before the second material, it is preferable that the first curable material is applied to the surface of the die form by a first curable material application system, and the second curable material is applied to the surface of the die form by a second curable material application system. While preferable, it is possible that both materials could be applied sequentially by a single material application system. In some embodiments, the first curable material application system comprises a first patterned material carrier (such as a patterned roller), wherein the surface of the first patterned material carrier has first and second sub-areas, the characteristics of the surface of the first patterned material carrier being different in the first and second sub-areas, and the first patterned material carrier applies the first curable material to the surface of the die form in accordance with the first sub-area of the surface of the first patterned material carrier. The second material application system may be similarly constructed, i.e. may comprise a second patterned material carrier with first and second sub-areas having different characteristics, or alternatively may apply the second material all over the substrate, for example, so as to fill all unfilled recesses.

In a particularly preferable implementation of the method of the present invention, there is further included the step a') providing an intermediate material carrier having a surface; wherein the first curable material is applied to the surface of the intermediate material carrier, wherein the second curable material is applied to the surface of the intermediate material carrier, and wherein the first curable material and the second curable material are applied to the surface of the die form from the surface of the intermediate material carrier. Further preferably, the first curable material is applied to the surface of the intermediate material carrier by a first curable material application system, and the second curable material is applied to the surface of the intermediate material carrier by a second curable material application system. In some embodiments, the intermediate material carrier is an offset roller.

In the embodiments comprising providing an intermediate material carrier having a surface, the first curable material and the second curable material are applied to the surface of the intermediate material carrier in accordance with their desired relative application positions on the die form before the two materials are offset onto the surface of the die form in a single application step. The first and second materials may be applied onto the surface of the intermediate material carrier in accordance with a design. For example, the first material may be applied in a first one or more regions and the second material applied to a second one or more regions offset from the first one or more regions. A particularly preferable example of this would be the application of the first and second materials to the intermediate material carrier in accordance with first and second colour components of a multi-coloured dot matrix design, the design then being transferred to the surface of the die form in a single application step. In these embodiments, the first curable material and the second curable material may be considered to be applied to the surface of the die form substantially simultaneously.

In the embodiments comprising providing an intermediate material carrier having a surface, preferably, the first curable material application system comprises a first patterned material carrier (such as a patterned roller), wherein the surface of the first patterned material carrier has first and second sub-areas, the characteristics of the surface of the first patterned material carrier being different in the first and second sub-areas, and the first patterned material carrier applies the first curable material to the surface of the intermediate material carrier in accordance with the first sub-area of the surface of the first patterned material carrier. The second material application system may be similarly constructed, i.e. may comprise a second patterned material carrier with first and second sub-areas having different characteristics, or alternatively may apply the second material all over the substrate, for example, so as to fill all unfilled recesses.

In the above embodiments preferably the first and/or second curable materials are applied using flexographic printing, gravure printing, lithographic printing, offset gravure printing, and/or offset lithographic printing.

Preferably, the first curable material and the second curable material are applied to the surface of the die form substantially in register with one another. It is understood in the art that material application systems, such as print systems, are capable of applying materials in "print register" with one another. This means that after a first material is applied in accordance with a design by a first application system, a second material may be applied in accordance with the design and the actual position of the second material relative to the first material will be within approximately 100 to 200 µm of the intended position of the second material relative to the first material.

While the above method requires that two materials be applied to the surface of the die form, it will be understood that embodiments in which step b) further comprises applying a third curable material to the surface of the die form such that said third curable material is received in a third set of the plurality of recesses are intended to be covered. In addition a fourth, or more, material may be applied to the surface of the die form. The application of more than two materials can allow, for example, full colour images to be applied to the surface of the die form.

Preferably, at least one of the plurality of recesses has a width of less than 50 µm, preferably less than 10 µm, more preferably less than 5 µm, and most preferably between about 1 to 3 µm. It will be understood that the width of recess is intended to mean the distance across the opening in the surface of the die form. For example, where the recess is a straight line trench, the width is the dimension of the opening in the surface of the die form in a direction perpendicular to its length, and where the recess is in the form of an alphanumeric character, the width is the line width of the typeface. Preferably the recesses have similar dimensions for depth.

In particularly preferable embodiments, the plurality of recesses define an image element pattern or a microimage element pattern, and in embodiments in which the plurality of recesses define the microimage element pattern, preferably each of the plurality of recesses or a group of the plurality of recesses corresponds to a microimage element of the microimage element pattern. Image element patterns and microimage element patterns are patterns particularly suited to generating optical effects such as lenticular effects, moire magnification effects, and integral imaging effects. For example, an image element pattern may be an arrangement of substantially parallel, spaced apart, straight stripes intended to collectively form a first image in a lenticular device. Alternatively, for example, a microimage element pattern may be an arrangement of microimage elements in the form of identical icons that are intended to form a magnified version of the icon when moire magnification is implemented.

In some embodiments, the pattern support layer is substantially transparent or translucent. This is particularly preferable as it allows the multi-material pattern to be viewed from either side of the pattern support layer which can, for example, allow the pattern to be used to generate optical effects from both sides of a security element.

In particularly preferable embodiments, the pattern support layer is a curable pattern support layer, and the method further comprises curing, at least partly, the curable pattern support layer in one or more steps after step c). By providing that the pattern support layer is curable, both the material forming the pattern and the material supporting the pattern can be cured to produce a firm bond between the two. While it is preferable that the pattern support layer is curable, it is foreseen that embodiments will exist in which adhesion between a pattern support layer and the first and second materials facilitates the removal of the first and second materials from the recesses of the die form and their retention on the pattern support layer.

As with the first and second curable materials, when a curable pattern support layer is provided, curing of the pattern support layer can be performed in one or more curing steps, and at any point after it is brought into contact with the surface of the die form, but preferably, at least one curing step occurs before separation of the pattern support layer from the surface of the die form to facilitate removal of the first and second curable materials from the recesses. Further preferably, curing, at least partly, the curable pattern support layer also cures, at least partly, at least one of the first curable material and the second curable material. However, alternatively, the first and second curable materials may already be fully cured when the pattern support layer is cured.

In some embodiments, step c) further comprises pressing the pattern support layer against the surface of the die form. Pressing the pattern support layer against the surface of the die form allows the pattern support layer to get a good anchor on the first and second curable material which facilitates removal of the first and second curable material from the recesses of the die form. In particularly preferable embodiments, pressing of the pattern support layer against the surface of the die form is performed by a backing roller and/or an impression roller. Use of a backing roller and/or impression roller is particularly preferable when the die form is a substantially cylindrical roller, as described above.

In many embodiments the first curable material has a first set of optical properties, and the second curable material has a second set of optical properties different from the first set of optical properties. In particular, it is preferable that the first curable material appears a first colour when viewed on the pattern support layer in reflected light and/or transmitted light, and the second curable material appears a second colour when viewed on the pattern support layer in reflected light and/or transmitted light.

Preferably, the first curable material and/or the second curable material are resins and/or inks, and/or comprise luminescent, phosphorescent, fluorescent, magnetic, thermochromic, photochromic, iridescent, metallic, optically variable and/or pearlescent pigments. While preferable, any curable material could be used, such as a thermally-curable resin or lacquer. However, preferably, the curable material is a radiation curable material, preferably a UV curable material. UV curable polymers employing free radical or cationic UV polymerisation are suitable for use as the UV curable material. Examples of free radical systems include photo-crosslinkable acrylate-methacrylate or aromatic vinyl oligomeric resins. Examples of cationic systems include cycloaliphatic epoxides. Hybrid polymer systems can also be employed combining both free radical and cationic UV polymerization. Electron beam curable materials would also be appropriate for use in the presently disclosed methods. Electron beam formulations are similar to UV free radical systems but do not require the presence of free radicals to initiate the curing process. Instead the curing process is initiated by high energy electrons.

Preferably the finished pattern is visible (optionally after magnification) to the human eye and so advantageously the curable material comprises at least one colourant which is visible under illumination within the visible spectrum. For instance, the material may carry a coloured tint or may be opaque. The colour will be provided by one or more pigments or dyes as is known in the art. Additionally or alternatively, the curable material may comprise at least one substance which is not visible under illumination within the visible spectrum and emits in the visible spectrum under non-visible illumination, preferably UV or IR.

In some embodiments, curing at least one of the first curable material, the second curable material and, if provided, the curable pattern support layer comprises curing by exposure to radiation, and preferably by exposure to UV radiation.

In some embodiments, there is further included the step of c') bringing a substrate layer in contact with a first side of the pattern support layer, either before, during or after step c), the pattern support layer being retained on the substrate layer; wherein the first curable material and second curable material are retained on a second side of the pattern support layer, the second side of the pattern support layer being opposite the first side of the pattern support layer. This is particularly preferable for embodiments in which the pattern support layer does not have characteristics that would allow it to be used as a security document substrate. For example, the pattern support layer may be selected for characteristics which facilitate its anchoring to the first and second curable materials for removal of said first and second curable materials. In which case, the pattern support layer may be applied to a substrate layer, where the substrate layer is selected, for example, to be suitable for use as the bulk substrate layer in a polymer bank note. It will be appreciated that the substrate layer may be brought into contact with the pattern support layer before, the pattern support layer is brought into contact with the surface of the die form, during this process of bringing the pattern support layer into contact with surface of the die form, and before, during or after the separation of the pattern support layer from the surface of the die form.

In embodiments which comprise the step of bringing a substrate layer in contact with a first side of the pattern support layer, preferably, the substrate layer is a pre-primed substrate layer. It will be understood that a pre-primed substrate layer is a substrate layer in which the surface has been treated in some way to promote bonding of the substrate layer with the pattern support layer such that the pattern support layer is firmly retained on the substrate layer.

In some embodiments the pattern support layer is a substrate layer suitable for use as a security document substrate. In these embodiments, the pattern support layer is selected to have characteristics which make it suitable for removing the first and second curable materials from the recesses in the surface of the die form, and for example, for acting as the bulk substrate layer in a polymer bank note.

Preferably, the pattern support layer is a continuous web and/or if provided, the substrate layer is a continuous web. Security documents, or security elements suitable for incorporation into security documents, are generally produced in the form of a continuous web for at least some portion of their manufacture. It is therefore preferable that the application of the pattern according to this method is also performed on a continuous web of pattern support layer. These embodiments are particularly preferable when the die form is provided in the form of a substantially cylindrical roller.

When, for example, the die form is provided in the form of a substantially cylindrical roller, another way of continuously providing pattern support layer is to provide that the pattern support layer is a material substantially continuously applied to the surface of the die form. This may be, for example, a clear tie coat layer that is applied by tie coat application means to the surface of the die form in a continuous manner.

Similarly, it is preferable that the first curable material and/or the second curable material are substantially continuously applied to the surface of the die form. While preferable, it is also possible that the first and second curable material could be applied to the surface of the die form until it is covered, before stopping applying curable material until all of the curable material has been transferred to the pattern support layer in accordance with the rest of the method.

In accordance with a second aspect of the present invention, there is provided a method of forming a pattern of at least two different materials in a substrate layer, comprising the steps of: a) providing a substrate layer, the substrate layer having, on a first side of the substrate layer, a surface comprising a plurality of recesses defining the pattern; b) applying a first material to the surface of the substrate layer such that said first material is received in a first set of the plurality of recesses; and applying a second material to the surface of the substrate layer such that said second material is received in a second set of the plurality of recesses (the second set being different from the first set); and c) securing the first material in the first set of the plurality of recesses and the second material in the second set of the plurality of recesses such that said first material and said second material are optically detectable from the first side of the substrate layer or from a second side of the substrate layer opposite to the first side of the substrate layer.

The above outlined method allows for a single multi-material pattern to be formed in a substrate layer. This represents an alternative to the first aspect of the present invention for providing a multi-material pattern suitable for use in generating optical effects such as lenticular effects, moire magnification effects, and integral imaging effects.

It will be appreciated that since the pattern is provided in the substrate, the register of the elements within the pattern will not depend on any of the steps associated with applying multiple materials to the substrate layer.

The method includes applying a first material to the surface of substrate layer such that it is received in a first set of the plurality of recesses. It will be appreciated that applying the first material may comprise applying the material to the surface of the substrate layer over a continuous area such that it is received in all the recesses within that continuous area, or that applying the first material may comprise applying the material in accordance with a more complex design which includes one or more regions of the first material. An example of the latter may be the application of the first material in accordance with a first colour component of a multi-coloured dot matrix design.

The method also includes applying a second material to the surface of the substrate layer such that it is received in a second set of the plurality of recesses. Applying the second material may comprise applying the second material over the already filled recesses, for example, substantially all over the surface of the substrate layer, with the second material being received only in the recesses which have not received the first material. Alternatively, the second material may be applied to a continuous area abutting or offset from the area to which the first material was applied. In yet other examples, the second material may be applied in accordance with a more complex design which complements the application of the first material. For example, continuing the above example in which the first colour is applied in accordance with a first colour component of a multi-coloured dot matrix design, the second material may be applied in accordance with a second colour component of the multi-coloured dot matrix design, the result being a plurality of laterally offset dots of two different materials over the surface of the substrate layer which may give the impression of a multi-coloured image.

The method finally includes securing the first and second material in the plurality of recesses such that said first material and said second material are optically detectable from either the first side or second side of the substrate layer. This is intended to cover any means of securing the materials in the recesses which still permits the optical detection of the pattern.

Thus, the first curable material is applied to a first area of the surface of the substrate such that the first material is received in a first set of the plurality of recesses. In some cases, the first area will define the first set of the plurality of recesses or, in other words, the first set of the plurality of recesses will be those recesses located within the first area. The first area will typically be only a partial area of the surface of the substrate, such that some recesses are intentionally unfilled by the first curable material. The second curable material may then be applied to a second area of the surface of the substrate such the second material is received in a second set of the plurality of recesses, wherein the first and second areas are different. In some cases, the second area will define the second set of the plurality of recesses. However, in other cases, the second area may, for example, overlap the first area, in which case the second set of recesses may be only those recesses in the second area which are not also in the first area.

The first and second areas may be laterally offset with respect to one another. The term "laterally offset" should be understood to mean that one area may partially overlap, abut, or be offset or spaced from the other area.

In some embodiments, the first material and/or the second material are curable, and securing the first material in the first set of the plurality of recesses and the second material in the second set of the plurality of recesses comprises curing, at least partially, the first material and/or curing, at least partially, the second material in one or more steps during or after step b). It will be appreciated that curing both of the first and second materials may secure the materials in the recesses and allow for the pattern to be visible when viewing the substrate layer from the side in which the recesses are formed. In practice, this visible pattern could be used to generate a lenticular effect, moire magnification effect, or integral imaging effect by arranging an appropriate series of lenses over the pattern in a way well known in the art. It will also be appreciated, that, as in the first aspect, this curing of the first and/or second materials may occur in a single step which partially or fully cures either or both materials, or may involve multiple curing steps. When multiple curing steps are used, they may be used to cure, partially or fully, either or both of the materials separately, and in addition may comprise a step of partial curing of both materials together.

In some embodiments securing the first material in the first set of the plurality of recesses and the second material in the second set of the plurality of recesses comprises applying a sealing layer to the first side of the substrate layer such that it covers the plurality of recesses. It will be appreciated that securing the materials using a sealing layer may be in addition to or instead of curing one or more of the materials. It should also be appreciated that a sealing layer is considered to be any layer which covers the recesses and keeps the cured or uncured material in the recesses.

Preferably, either or both of the substrate layer and the sealing layer are substantially transparent or translucent such that the first material and the second material are optically detectable through said substantially transparent or translucent substrate layer and/or sealing layer. It will be appreciated that providing that at least one of these layers is transparent or translucent is a preferable means of ensuring that the first and second materials are optically detectable from the first or second sides of the substrate layer. In these embodiments, the transparent or translucent substrate layer or sealing layer may be used as an optical spacer for a set of focussing devices, such as lenses, used to generate a lenticular effect, moire magnification effect, or integral imaging effect.

In some embodiments, the method further comprises the step of: b') removing from the surface of the substrate layer substantially all of the first material and/or the second material not in the first or second sets of the plurality of recesses in one or more steps during and/or after step b). In these embodiments, excess material is removed from the surface of the substrate layer following the application of the first and/or second materials. It will be appreciated that in applying material to the surface of the substrate layer, it is likely that not all of the material will be received in the recesses, and it will therefore be desirable to remove this extra material. Removal of the material not in the recesses may be performed in one or more steps after application of at least one of the materials, and may be performed before, during or after curing of the material, if the material is to be cured. Removing the excess material may be performed, for example, by a doctoring blade or doctoring surface, such as a sacrificial web or cleaning roller.

In some embodiments, applying the first material to the surface of the substrate layer is performed before applying the second material to the surface of the substrate layer. That is to say, one material is applied before the other material. In these embodiments, it is particularly preferable that step b) comprises in order: b) i) applying a first material to the surface of the substrate layer such that said first material is received in a first set of the plurality of recesses; b') i) removing from the surface of the substrate layer substantially all of the first material not in the first set of the plurality of recesses; b) ii) applying a second material to the surface of the substrate layer such that said second material is received in a second set of the plurality of recesses; and b') i) removing from the surface of the substrate layer substantially all of the second material not in the second set of the plurality of recesses. Further, in embodiments in which both materials are cured, preferably step c) comprises: c) i) curing, at least partly, the first material after step b') i) and before step b) ii); and c) ii) curing, at least partly, the second material after step b') i). Applying a first material, removing excess, then curing before repeating for a second material has been found to be a particularly preferable way of applying material directly to the substrate layer. By curing before application of a second material, the mixing of the materials is reduced or prevented resulting in a particularly good final multi-material pattern. While it is preferable that material is removed before curing in the above, it is also possible that the first material is cured and then excess removed before the same is done for the second material.

Further, in embodiments in which the first material is applied before the second material, it is preferable that the first material is applied to the surface of substrate layer by a first material application system, and the second material is applied to the surface of the substrate layer by a second material application system. In some embodiments, the first material application system comprises a first patterned material carrier (such as a patterned roller), wherein the surface of the first patterned material carrier has first and second sub-areas, the characteristics of the surface of the first patterned material carrier being different in the first and second sub-areas, and the first patterned material carrier applies the first material to the surface of the die form in accordance with the first sub-area of the surface of the first patterned material carrier. The second material application system may be similarly constructed, i.e. may comprise a second patterned material carrier with first and second sub-areas having different characteristics, or alternatively may apply the second material all over the substrate, for example, so as to fill all unfilled recesses.

In a particularly preferable implementation of the method of the present invention, there is further included the step a') providing an intermediate material carrier having a surface; wherein the first material is applied to the surface of the intermediate material carrier, wherein the second material is applied to the surface of the intermediate material carrier, and wherein the first material and the second material are applied to the surface of the substrate layer from the surface of the intermediate material carrier. Further preferably, the first material is applied to the surface of the intermediate material carrier by a first material application system, and wherein the second material is applied to the surface of the intermediate material carrier by a second material application system. In some embodiments, the intermediate material carrier is an offset roller.

In the embodiments comprising providing an intermediate material carrier having a surface, the first material and the second material are applied to the surface of the intermediate material carrier in accordance with their desired relative application positions on the substrate layer before the two materials are offset onto the surface of the substrate layer in a single application step. The first and second materials may be applied onto the surface of the intermediate material carrier in accordance with a design. For example, the first material may be applied in a first one or more regions and the second material applied to a second one or more regions offset from the first one or more regions. A particularly preferable example of this would be the application of the first and second materials to the intermediate material carrier in accordance with first and second colour components of a multi-coloured dot matrix design, the design then being transferred to the surface of the substrate layer in a single application step. In these embodiments, the first material and the second material may be considered to be applied to the surface of the substrate layer substantially simultaneously.

In the embodiments comprising providing an intermediate material carrier having a surface, preferably, the first material application system comprises a first patterned material carrier (such as a patterned roller), wherein the surface of the first patterned material carrier has first and second sub-areas, the characteristics of the surface of the first patterned material carrier being different in the first and second sub-areas, and the first patterned material carrier applies the first curable material to the surface of the intermediate material carrier in accordance with the first sub-area of the surface of the first patterned material carrier. The second material application system may be similarly constructed, i.e. may comprise a second patterned material carrier with first and second sub-areas having different characteristics, or alternatively may apply the second material all over the substrate, for example, so as to fill all unfilled recesses.

In the above embodiments, preferably the first and/or second materials are applied using flexographic printing, gravure printing, lithographic printing, offset gravure printing, and/or offset lithographic printing.

Preferably, the first curable material and the second curable material are applied to the surface of the substrate layer substantially in register with one another. It is understood in the art that material application systems, such as print systems, are capable of applying materials in "print register" with one another. This means that after a first material is applied in accordance with a design by a first application system, a second material may be applied in accordance with the design and the actual position of the second material relative to the first material will be within approximately 100 to 200 µm of the intended position of the second material relative to the first material.

While the above method requires that two materials be applied to the surface of the substrate layer, it will be understood that embodiments in which step b) further comprises applying a third material to the surface of the substrate layer such that said third material is received in a third set of the plurality of recesses are intended to be covered. In addition a fourth, or more, material may be applied to the surface of the die form. The application of more than two materials can allow, for example, full colour images to be applied to the surface of the die form.

Preferably, at least one of the plurality of recesses has a width of less than 50 µm, preferably less than 10 µm, more preferably less than 5 µm, and most preferably between about 1 to 3 µm. It will be understood that the width of recess is intended to mean the distance across the opening in the surface of the die form. For example, where the recess is a straight line trench, the width is the dimension of the opening in the surface of the die form in a direction perpendicular to its length, and where the recess is in the form of an alphanumeric character, the width is the line width of the typeface. Preferably the recesses have similar dimensions for depth.

In particularly preferable embodiments, the plurality of recesses define an image element pattern or a microimage element pattern, and in embodiments in which the plurality of recesses define the microimage element pattern, preferably each of the plurality of recesses or a group of the plurality of recesses corresponds to a microimage element of the microimage element pattern.

In many embodiments the first material has a first set of optical properties, and the second material has a second set of optical properties different from the first set of optical properties. In particular, it is preferable that the first material appears a first colour when viewed in reflected light and/or transmitted light, and the second material appears a second colour when viewed in reflected light and/or transmitted light.

Preferably, the first material and/or the second material are resins and/or inks, and/or comprise luminescent, phosphorescent, fluorescent, magnetic, thermochromic, photochromic, iridescent, metallic, optically variable and/or pearlescent pigments.

Preferably the finished pattern is visible (optionally after magnification) to the human eye and so advantageously the material comprises at least one colourant which is visible under illumination within the visible spectrum. For instance, the material may carry a coloured tint or may be opaque. The colour will be provided by one or more pigments or dyes as is known in the art. Additionally or alternatively, the material may comprise at least one substance which is not visible under illumination within the visible spectrum and emits in the visible spectrum under non-visible illumination, preferably UV or IR.

In embodiments which involve curing the first and/or second material, preferably curing at least one of the first material and the second material comprises curing by exposure to radiation, and preferably by exposure to UV radiation.

Preferably, the substrate layer is a continuous web. Security documents, or security elements suitable for incorporation into security documents, are generally produced in the form of a continuous web for at least some portion of their manufacture. It is therefore preferable that the application of the pattern according to this method is also performed on a continuous web substrate layer. Further, it is preferable that the first material and/or the second material are substantially continuously applied to the surface of the substrate layer.

While the above method requires that a substrate be provided which has recesses in a surface, in some embodiments, step a) comprises: a) i) providing a substrate layer, the substrate layer having, on a first side of the substrate layer, a surface; and a) ii) forming in the surface a plurality of recesses defining the pattern. In other words, in some embodiments the substrate comprising recesses is provided by forming the recesses in a substrate layer. Many ways of forming recesses in a substrate layer, which would be suitable for forming the recesses according to the pattern, are known in the art. WO05052650 A2 and WO06125224 A2 disclose methods which would be suitable for forming in the surface a plurality of recesses defining the pattern.

The methods according to both the first and second aspect of the present invention are applicable to the production of documents of value, in particular banknotes, cheques, passports, identity cards, certificates of authenticity, fiscal stamps, and to the production of security elements.

### Brief Description of the Drawings

Examples of the invention will now be described with reference to the accompanying drawings, in which:
Figure 1 is a plan view of a security document comprising a security element;
Figures 2A and 2B show a lenticular image element pattern and a cross-section of a lenticular security device having the lenticular image element pattern;
Figures 3A and 3B show a microimage element pattern and a cross-section of a moire magnification device having the microimage element pattern;
Figure 4 is a cross-sectional view of an apparatus suitable for performing the method according to the first aspect of the present invention;
Figure 5 is a schematic representation of a first pattern formed according to the present invention;
Figure 6 is a schematic representation of a second pattern formed according to the present invention;
Figure 7 is a cross-sectional view of a second apparatus suitable for performing the method according to the first aspect of the present invention;
Figure 8 is a flow diagram showing the method according to the first aspect of the present invention;
Figure 9 is a cross-sectional view of an apparatus suitable for performing the method according to the second aspect of the present invention; and
Figure 10 is a flow diagram showing the method according to the second aspect of the present invention.

### Detailed Description

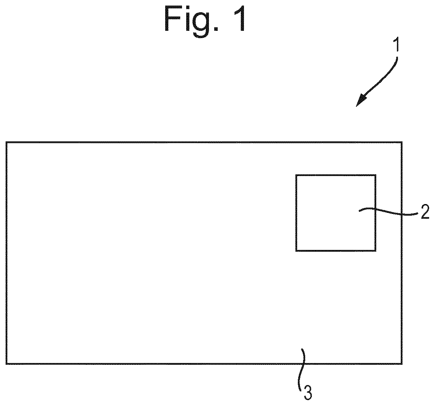

Figure 1 shows a plan view of a security document 1 comprising a security element 2 manufactured in accordance with the method according to the present invention and located on a security document substrate 3. The security document in this example is a banknote, however security elements, such as security element 2, are suitable for use on many different security documents. The security element 2 in this example is an optical device integrally formed on a substrate layer of the banknote, however the method according to the present invention is also applicable to other security elements either integrally formed on a substrate layer of the banknote or separately formed for later application to the banknote or incorporation into the banknote substrate. Examples of suitable security elements include stripes, patches, threads, transfer foils, etc.

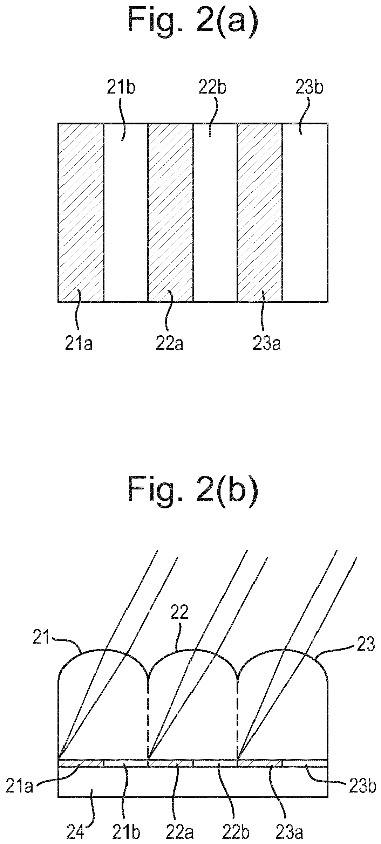

Figure 2A shows an image element pattern suitable for use in the lenticular security device of 2B. The lenticular security device comprises a plurality of cylindrical lenses 21, 22, 23 over a series of image elements 21a, 21b, 22a, 22b, 23a, 23c located on a support layer 24. Each lens 21, 22, 23 has beneath it one of a first set of image elements 21a, 22a, 23a, the first set of image elements having corresponding slices of a first image, and one of a second set of image elements 21b, 22b, 23b, the second set of image elements having corresponding slices of a second image. When viewed from a first range of viewing angles, only the first set of image elements 21a, 22a, 23a are visible. When viewed from a second range of viewing angles, only the second set of image elements 21b, 22b, 23b are visible. The viewer therefore sees a first image corresponding to the first set of image elements 21a, 22a, 23a over the first range of viewing angles, and a second image corresponding to the second set of image elements 21b, 22b, 23b over the second range of viewing angles. The periodicity and therefore maximum base diameter for the cylindrical focussing elements is preferably in the range 5 to 200 µm, more preferably 10-100 µm and even more preferably 10 to 40 µm. The width of the image strip will be dependent on the type of optical effect required for example if the diameter of the focussing elements is 30 µm then a simple switch effect between two views A and B could be achieved using 15 µm wide image strips. Alternatively for a smooth animation effect it is preferable to have as many views as possible typically at least three but ideally as many as 30, in this case the width of the image strips could be in the range 0.5 to 6 µm.

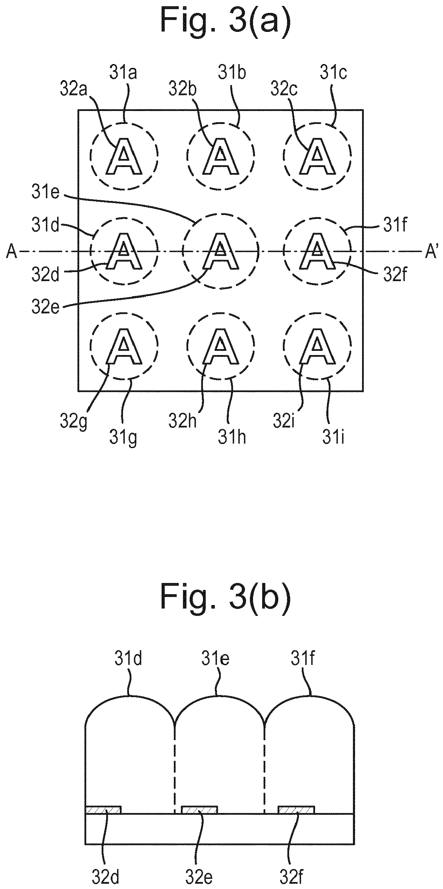

Figure 3A shows a microimage pattern 32 suitable for use in the moire magnification device 30 of Figure 3B. The moire magnification device comprises a two-dimensional array of spherical lenses 31a to 31i located above the microimage element pattern 32. The micro image pattern 32 comprises a two-dimensional array of microimage elements 32a to 32i each in the form of a letter 'A', the array of microimage elements 32a to 32i having a slightly different pitch than the above array of lenses 31a to 31i, as is well known in the art. The microimage elements 32a to 32i will typically have dimensions which are equal to or less than that of the lens diameter. The spherical lenses will typically have a diameter of less than 250 µm and more preferably less than 100 µm and even more preferably less than 50 µm and even more preferably less than 30 µm.

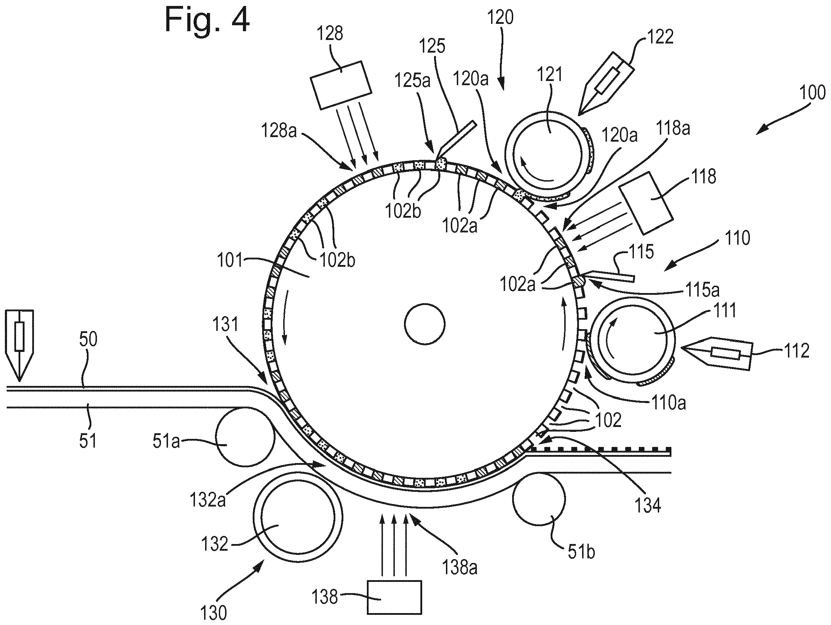

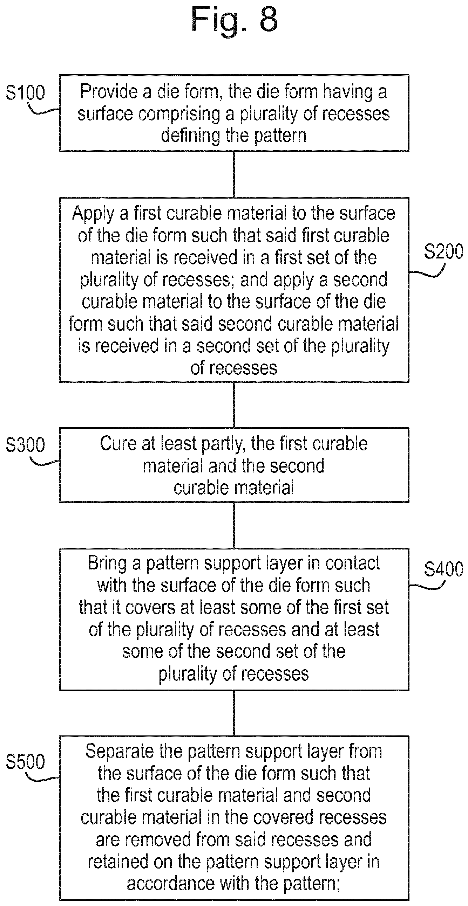

A method of forming a pattern, similar to those shown in Figures 2A and 3A, of at least two different materials will now be described with reference to the apparatus shown in Figures 4 and the steps S100 to S500 of the flow diagram shown in Figure 8.

Figure 4 shows a printing apparatus 100 suitable for executing the method according to the present invention. The printing apparatus 100 comprises a die form 101, which is provided in accordance with step S100. In this example, the die form 101 is a substantially cylindrical roller, which rotates about a fixed axis, the roller having a circumference of between 300 and 500 cm. The die form has in its surface a plurality of recesses 102. In this embodiment, the plurality of recesses 102 are a plurality of A-shaped recesses. Each recess has a line width of approximately 2 µm and a depth of approximately 3 µm. The recesses repeat over the surface of the die form in accordance with the desired layout of the micropattern to be applied.

The application of material in accordance with step S200 and the processing of said material will now be described. It should be appreciated that the application, movement and processing of material will described with respect to some arbitrary portion of the material on the surface of the die form, and that while this portion of the material is described as being subjected to different processing steps sequentially, the described process involves continuous application, movement and processing of material.

The printing apparatus comprises a first material application system 110 for applying a first curable material of a first colour to the die form at a first application position 110a. The first material application system 110 comprises a first offset roller 111 located parallel to the substantially cylindrical die form roller 101 and rotatably mounted about fixed axis at a first position about the circumference of the die form roller 101, with their respective surfaces adjacent one another. The offset roller is coated with a UV-curable ink by an applicator 112. As the die form 101 rotates in an anti-clockwise direction, as viewed in Figure 4, the offset roller 111 rotates clockwise such that the surface of the die form roller and the surface of the offset roller are traveling at approximately the same speed. Material applied to the surface of the offset roller 111 by the applicator 112 is transferred onto the surface of the die form at the application position 110a as the two rollers rotate, and is introduced into a first set of recesses 102a of the die form roller. The material is applied by the applicator 112 to the offset roller 111 so that when the material is transferred to the die form 101, the material covers the desired area or areas of the die form, and hence is introduced into the desired set of recesses 102a. It should be noted that, in Figure 4, the modulation of the application of material to the rollers and the die form is demonstrated with respect to the circumferential direction of the rollers and die form, however, the application of material may alternatively or in addition be modulated in the axial direction of the rollers and the die form.

While, in the present embodiment, the first material application system 110 is described as comprising a first material applicator 112 which selectively applies material to the surface of the offset roller 111, other means of applying a first material over a partial region of the die form are foreseen. In an alternative construction (not shown) the first material application system 110 is replaced by a system comprising a first material applicator and a patterned roller, the patterned roller having a surface which is formed of an ink-receptive material, such as a rubber or plastic, in some areas, and a non-ink-receptive material, such as a smooth metal, in other areas. Here, the ink-receptive and non-ink-receptive areas may define the outline of the first area, i.e. the area of the die form that is to be coated in the first material so as to introduce the first material into some of the recesses, and this first area may be in accordance with a pattern, for example defining one or more indicia. The first material applicator may coat the entire surface of the patterned roller with first material, in which case the inked patterned roller may be doctored to remove the first material from non-ink-receptive areas before it is brought into contact with the surface of the die form. Alternatively, the first material applicator may apply an all over coating to an intermediate roller, which then contacts the patterned roller. In such cases, the patterned roller will only pick up first material from the intermediate roller in those ink-receptive areas of the patterned roller. Both of the above alternatives may involve the use of an excess of first material. Therefore, both will typically require means for cleaning the excess first material. For example, in the former alternative, the doctoring means, which may be a cleaning roller, may be cleaned by passing its surface through a vat of cleaning solution. In the latter alternative, the intermediate roller may be cleaned by passing its surface through a vat of cleaning solution after contact with the patterned roller. It will be appreciated that the above alternative construction of a material application system may be used in place of any of the below described material application systems in the ensuing embodiments.

Returning to the embodiment shown in Figure 4, the die form 101 rotates further, moving the applied material away from the application position 110a to a doctoring blade 115 at doctoring position 115a. The doctoring blade 115 is a strip of material, typically steel or plastic, which contacts the surface of the die form 101 along its length. As the surface of the die form 101 moves past the doctoring blade 115, material not located in the recesses 102 of the die form is removed from the surface of the die form, leaving only the material that was received in the recesses to move past the doctoring position 115a. While the doctoring is shown and described as being performed by a doctoring blade, other doctoring means for use in place of, or in addition to, the doctoring blade are foreseen. In alternative embodiments, the material not located in the recesses may be removed by bringing the surface of the die form into contact with a doctoring surface, for example, the surface of a cleaning or wiping roller, or a sacrificial web, which picks up the material not located in the recesses. In such cases, the doctoring surface may need to be cleaned, for example, by providing for the doctoring surface to pass through a vat of cleaning solution to remove the first material. It will be appreciated that these alternative doctoring means may be used in place of, or in addition to, any of the below described doctoring blades in the ensuing embodiments.

The die form 101 continues to rotate, moving the material, now located exclusively in the first set of recesses 102a, to a curing position 118a. As the material passes through the curing position 118a the material in the first set of recesses 102a is exposed to radiation from a UV light source 118 located above the surface of the die form 101. As the material passes beneath this UV light source it is partially cured and its viscosity increases.

The die form 101 rotates further, towards a second application position 120a. At the second application position 120a, a second curable material of a second colour is applied to the surface of the die form 101. This second curable material is applied by a second material application system 120. The second material application system is constructed similarly to the first, and comprises a second offset roller 121 located parallel to the substantially cylindrical die form roller 101 and rotatably mounted about a fixed axis at a second position about the circumference of the die form roller 101, with their respective surfaces adjacent one another. The offset roller is coated with a UV-curable ink by a second applicator 122. As the die form 101 and the second offset roller 121 rotate, the material on the offset roller is transferred onto the surface of the die form at the application position 120a, and is introduced into a second set of recesses 102b of the die form roller. As with the first material application system, the material is applied by the second applicator 122 to the second offset roller 121 so that when the material is transferred to the die form 101, the material covers the desired areas of the die form, and hence is introduced into the desired set of recesses 102a. The second material may be applied to the second offset roller 121 such that when it is transferred to the surface of the die form 101 it coats the surface of the die form in an area or areas offset from or abutting the area or areas to which the first material was applied, and hence is introduced into the second set of recesses 102b. Alternatively, the second material may be applied to the second offset roller 121 such that when it is transferred to the surface of the die form 101 it coats the surface of the die form in an area or areas which overlap the area or areas to which the first material was applied. In this case, the second material that is applied to an area in which the recesses are filled with the first material will be unable to be received by the recesses, and will only be received in recesses in areas to which the first material was not applied.

Once the second material has been applied to the die form 101, in a similar way to the first material, and received in a second set of recesses, as the die form continues to rotate, the second material is moved towards a second doctoring blade 125 at second doctoring position 125a. As with the first doctoring blade 115, the second doctoring blade 125 is a strip of material, typically steel or plastic, which contacts the surface of the die form 101 along its length. As the surface of the die form 101 moves past the second doctoring blade 125, material not located in the recesses 102 of the die form is removed from the surface of the die form, leaving only the material that was received in the recesses to move past the doctoring position 125a.

The die form 101 continues to rotate, moving the cured or partially cured first material in the first set of recesses 102a and the uncured second material in the second set of recesses 102b to a curing position 128a. As the second material passes through the curing position 128a the material in the second set of recesses 102b is exposed to radiation from a second UV light source 128 located above the surface of the die form 101. As the material passes beneath this UV light source it is at least partially cured and its viscosity increases in accordance with step S300. If the first and second materials are located in areas offset from one another, the second UV light source 128 may be positioned and configured such that it substantially only cures the material in an area or areas of the second set of recesses 102b. Alternatively the second UV light source 128 may be configured to cure or partially cure the second material in the second set of recesses 102b whilst simultaneously further curing the first curable material in the first set of recesses 102a.

With the die form now having first and second sets of recesses containing the cured first and second materials, the die form continues to rotate, bringing the first and second materials to a pattern removal system 130. The material in the die form 101 first arrives at a pattern support layer application position 131. In this embodiment, the pattern support layer 50 is an optically clear tie coat provided continuously over an upper surface of a continuous substrate web 51, the substrate of the substrate web being one suitable for use as a security document.

The web of substrate 51 moves along a web path, and is supported along its path by rollers 51a, 51b. At the pattern support layer application position 131 the pattern support layer 50 on the web of plastic substrate is brought into contact with the surface of the die form 101 such that the pattern support layer covers the first and second sets of recesses 102a, 102b, in accordance with step S400. The substrate web is partially wrapped around the surface of the die form, which is to say that the substrate web follows the circumference of the die form 101 for approximately a quarter of the circumference of the die form. The movement speed of the web of substrate 51 is configured such that for the duration of the partial wrap, the pattern support layer 50 does not move with respect to the surface of the die form 101 as the die form rotates.

The surface of the die form and the substrate web 51 move away from the pattern support layer application position 131 through further rotation of the die form 101, and towards an impression position 132a. At the impression position, the substrate web 51 passes over an impression roller 132 which is positioned to press the substrate web 51, and hence the pattern support layer against the surface of the die form 101. This pressing of the pattern support layer 50 against the surface of the die form also presses the pattern support layer against the first and second materials in the first and second sets of recesses 102a, 102b, allowing the pattern support layer to get a good anchoring to the first and second materials.

The surface of the die form 101 and the substrate web 51 continue to move to a pattern support layer curing position 138a. At the pattern support layer curing position, UV radiation from a third UV light source 138 impinges on the pattern support layer 50 and the first and second materials in the first and second sets of recesses 102a, 102b. Impingement of the UV radiation on the pattern support layer is permitted through the web substrate 51 as, in this embodiment, the web substrate is an optically clear substrate, and impingement of the UV radiation on the material in the recesses is permitted through the substrate web 51 and the pattern support layer 50 because the pattern support layer is the optically clear tie coat. Curing of the pattern support layer 50 and further curing of the material in the recesses 102 while the two are in contact results in a firm bond forming between the two materials.

After the pattern support layer 50 has been cured, the surface of the die form 101 and the substrate web 51 continue to a pattern removal location 134, at which the materials in the recesses 102 are removed from said recesses. The removal of the materials occurs as the direction of travel of the substrate web 51 becomes different than direction of travel of the surface of the die form 101, and the pattern support layer 50, which is secured to the substrate web 51, is pulled away from the surface of the die form. This pulling of the pattern support layer 50 from the surface of the die form in a peeling-type motion causes the materials in the recesses 102 to be pulled from their respective recesses and retained on the pattern support layer in accordance with the pattern in step S500.

The substrate web 51 with pattern support layer 50 having a pattern formed of first and second materials on its upper surface is then conveyed away from the die form by movement of the substrate web, and used in forming security documents and/or security elements. Meanwhile, the surface of the die form, now featuring once again empty recesses 102 continues round and arrives back at the first material application system 110 where material can be reapplied.

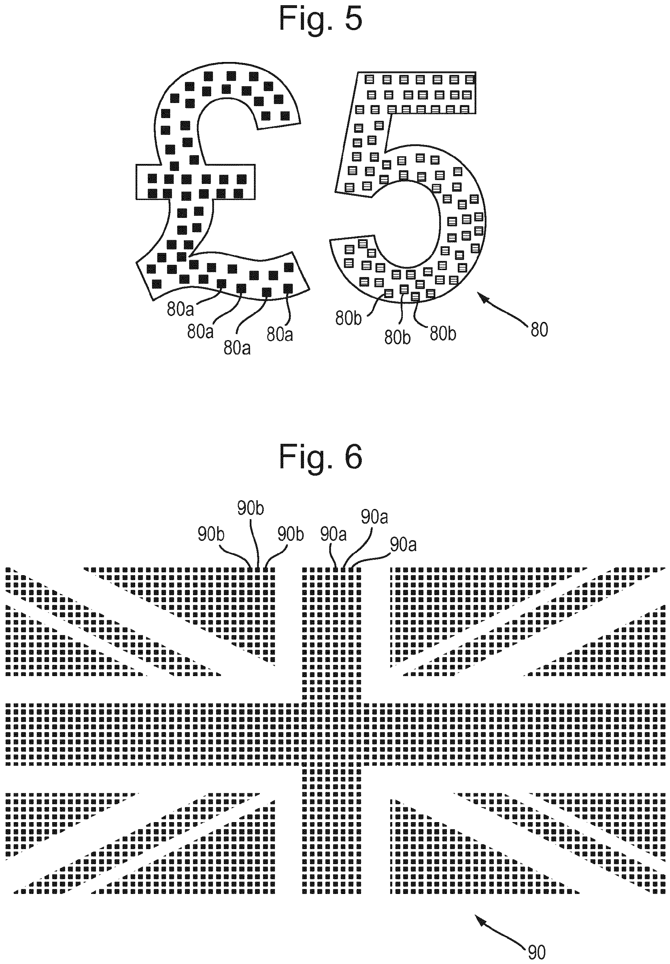

Figures 5 and 6 shows plan views of just two of the many different patterns that may be applied using the method described above. The pattern 80 shown in Figure 5 shows a '£' symbol formed of a plurality of elements 80a of a first ink having a first colour and a '5', offset from the '£' symbol, and formed of a plurality of elements 80b of a second ink having a second colour. As an example, the image elements 80a may correspond to the first set of recesses 102a, and the elements 80b correspond to the second set of recesses 102b. In the Figure, the elements 80a and 80b are shown schematically as squares, but may be any shape, and in preferable embodiments each element 80a in the '£' symbol may itself be a '£' symbol and each element 80b in the '5' may itself be a '5'. While the above pattern is described as comprising elements 80a formed of a first material having a first colour and elements 80b formed of a second material having a second colour, it will be appreciated that the first and second materials may have other optical properties. For example, elements 80a and 80b may be formed of different clear, fluorescent inks.

The pattern 90 shown in Figure 6 is a representation of the flag of the UK, formed of a plurality of elements 90a, 90b of two different colours. Again, the elements are shown schematically as squares, but may be any shape.

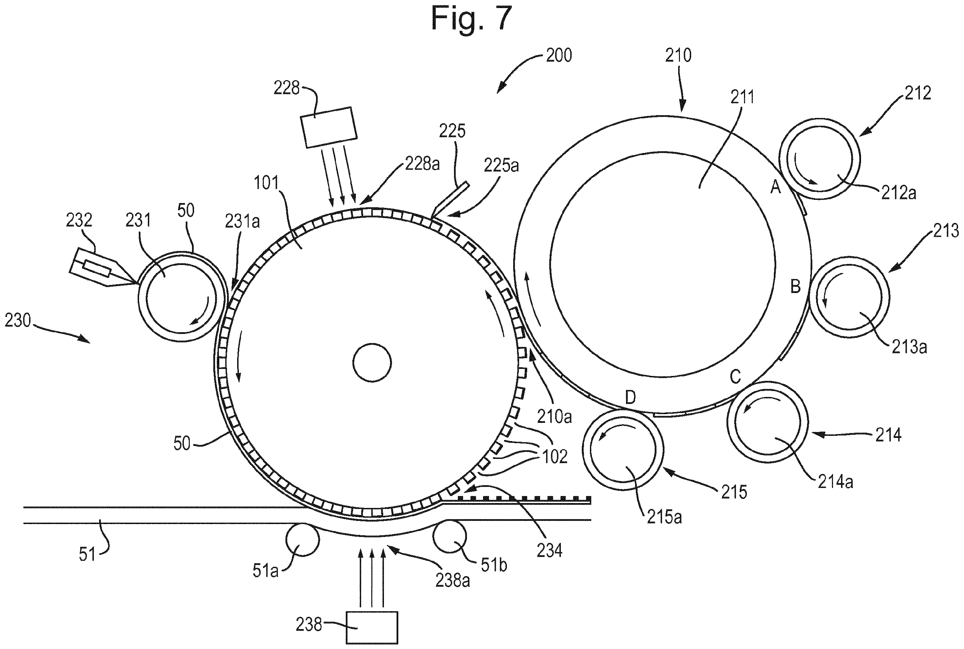

Figure 7 shows a second printing apparatus 200 suitable for executing the method according to the present invention. The second printing apparatus is largely similar to the first apparatus 100, and the differences will be described in detail below.

A die form 101 is provided which may be identical to the die form described in relation to Figure 4. However, instead of first and second materials being applied separately to the die form 101, in this embodiment, a single multi-material application system 210 is provided. The multi-material application system 210 comprises a large offset roller 210, similar in size to the die form 101 and located parallel to the substantially cylindrical die form roller 101 and rotatably mounted about a fixed axis at a first position about the circumference of the die form roller 101, with their respective surfaces approximately in contact with one another. The large offset roller 210 is coated with four different UV-curable inks by applicator subsystems 212, 213, 214, 215. Each applicator subsystem comprises a smaller offset roller 212a, 213a, 214a, 215a which is coated with ink by a respective applicator (not shown) and rotates to coat the large offset roller 211 with their respective materials in much the same way the offset rollers 111, 121 of the printing apparatus 100 of the embodiment of Figure 4 coated the die form 101. In this way, the large offset roller 211 can collect four different curable materials from the separate applicator subsystems 212, 213, 214 and apply all four materials substantially simultaneously to the surface of the die form 101 at the application position 210a, thereby introducing the four materials into respective sets of recesses 102. As with the apparatus of Figure 4, it will be appreciated that the modulation of the application of material to the rollers and the die form is demonstrated with respect to the circumferential direction of the rollers and die form, however, the application of material may alternatively or in addition be modulated in the axial direction of the rollers and the die form.

After the four materials are transferred to the die form and are received in their respective sets of recesses, the die form moves the materials to a doctoring position 225a at which a single doctoring blade 225, similar to the doctoring blades of the embodiment of Figure 4, removes all of the material not received in the recesses.

The die form continues to rotate and brings the material, now substantially exclusively located in the recesses 102, to a first curing position 228a, at which UV radiation from a UV light source 228 impinges on the four materials. As the materials pass beneath this UV light source they are at least partially cured and their viscosity increases.

The now cured or partially cured material in the recesses 102 of the die form 101 now pass to the pattern removal system 230. In this embodiment, the pattern support layer 50 is not provided on a substrate web 51, but rather is applied to surface of the die form as layer of curable material. An offset roller 231 is coated in an optically clear curable material from an applicator 232 and, as it rotates, transfers the curable material to the surface of the die form 101 at a coating position 231a such that it covers all of the recesses of the die form 101.

The surface of the die form continues to rotate, bringing the curable pattern support layer 50, which now covers the material in the recesses 102, in contact with a substrate web 51 which wraps around a part of the circumference of the die form 101. The substrate web is pre-primed, which means that the surface has been treated to promote bonding of the substrate layer with the pattern support layer such that the pattern support layer is firmly retained on the substrate layer. The substrate web urges the pattern support layer 50 against the material in the recesses 102 as they pass through a second curing position 238a. At this curing position, UV radiation from a UV light source cures the pattern support layer, and optionally cures the material in the plurality of recesses, thereby forming a strong bond between the patent support layer and the material in the recesses 102, and the patent support layer and the pre-primed substrate web 51.

After the curing, the surface of the die form 101, the cured pattern support layer, and the substrate web 51 continue to a pattern removal location 234, at which the materials in the recesses 102 are removed from said recesses. The removal of the materials occurs as the direction of travel of the substrate web 51 becomes different than direction of travel of the surface of the die form 101, and the pattern support layer 50, which is now secured to the pre-primed substrate web 51, is pulled away from the surface of the die form. This pulling of the pattern support layer 50 from the surface of the die form in a peeling-type motion causes the materials in the recesses 102 to be pulled from their respective recesses and retained on the pattern support layer in accordance with the pattern.

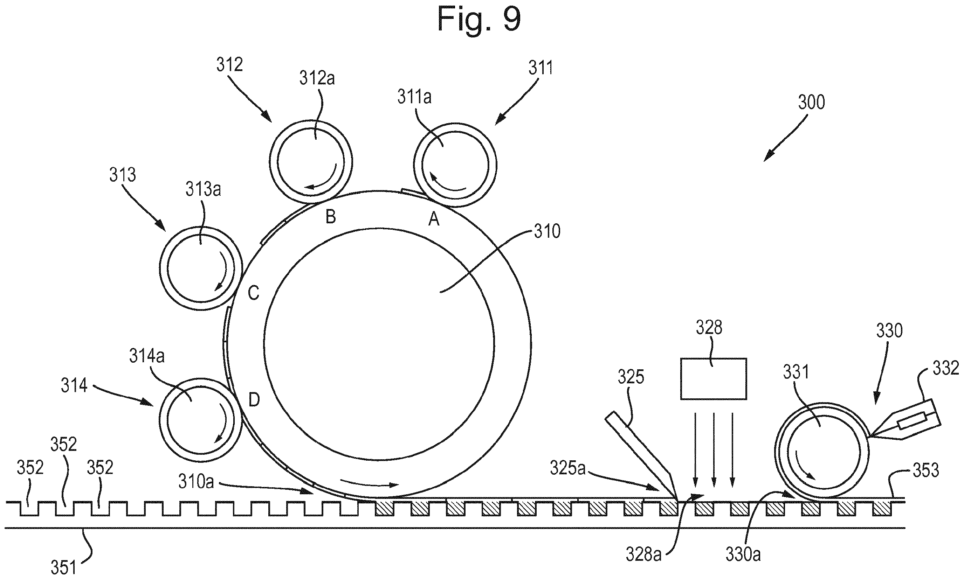

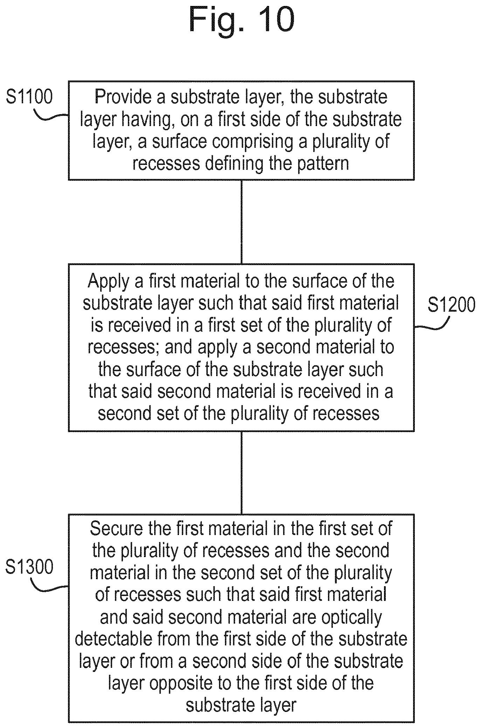

The method of forming a pattern of at least two different materials in a substrate layer according to the second aspect of the present invention will now be described with reference to Figures 9 and 10.

In this embodiment of the invention, four different materials are applied by a printing apparatus 300 to the surface of a substrate 351, the substrate having a plurality of recesses 352 which define the desired pattern, and which receive the four materials. The substrate 351 is provided, in accordance with step S1100, in the form of a continuous web, supported along its path by rollers (not shown).

The printing apparatus 300 comprises a large offset roller 310, supplied with curable material by four application sub-systems 311, 312, 313, 314. The continuous web of substrate 351 follows a path which brings it adjacent the large offset roller 310 at an application position 310a, before continuing away from the large offset roller.

Each application sub-system comprises an offset roller 311a, 312a, 313a, 314a which applies the material to the large offset roller 310 in an identical manner to the offset rollers 212a, 213a, 214a, 215a of the embodiment shown in Figure 7. It will be appreciated that, in Figure 9, the modulation of the application of material to the rollers and the substrate layer is demonstrated with respect to the circumferential direction of the rollers and the longitudinal direction of the substrate layer, however, the application of material may alternatively or in addition be modulated in the axial direction of the rollers and hence modulated in the lateral direction of the substrate layer. The large offset roller rotates and brings the four materials toward the application position 310a. At the application position, the large offset roller 310 applies the materials to the surface of the substrate 351 containing the recesses 352, and thereby introduces the materials into respective sets of recesses in accordance with the arrangement of the materials on the large offset roller 310 in a step S1200.

The substrate web 351 travels away from the offset roller 310 carrying the four materials in respective recesses 352 and on the surface of the substrate 351 to a doctoring position 325a. At the doctoring position 325a, a doctoring blade 325 extends across the width of the substrate web 351. As above, the doctoring blade 325 is a strip of material, typically steel or plastic, which removes excess material from the surface of the substrate 351 as the substrate passes through the doctoring position 325a.

The now doctored substrate 351 with material exclusively in the recesses 352 continues to a curing position 328a. As the substrate passes through the curing position 328a the material in the recesses 352 is exposed to radiation from a UV light source 328 located above the surface of the substrate. As the material passes beneath this UV light source it is partially or fully cured such that its viscosity increases so it may be retained in the recesses 352.

The substrate web 351 continues to a sealing layer application position 330a at which a sealing layer application system applies a sealing layer 353 in accordance with step S1300. The sealing layer application system comprises an offset roller located above the substrate web, orientated across the direction of travel of the substrate web 351, for applying material to the surface of the substrate web that contains the recesses 352. A sealing material applicator 332 applies the sealing layer material to the offset roller 331 which rotates and transfers the sealing layer material to the surface of the substrate at the sealing layer application position 330a. In this embodiment, the sealing layer is optically clear, and hence allows the pattern to be visible from the upper surface of the substrate.

The substrate web, now containing cured material sealed in the recesses continues along the web path for further processing, for example, by application of focussing elements to form a security element on a security document.

It will be appreciated that the different embodiments of forming a pattern according to the first aspect of the present invention have analogous embodiments in the second aspect of the present invention, which should be apparent based on the above teachings and are therefore not described in detail for conciseness.
The invention may be further understood by reference to the following numbered clauses.
Clause 1. A method of applying a pattern formed of at least two different materials to a pattern support layer, comprising the steps of: a) providing a die form, the die form having a surface comprising a plurality of recesses defining the pattern; b) applying a first curable material to the surface of the die form such that said first curable material is received in a first set of the plurality of recesses; and applying a second curable material to the surface of the die form such that said second curable material is received in a second set of the plurality of recesses; c) bringing a pattern support layer in contact with the surface of the die form such that it covers at least some of the first set of the plurality of recesses and at least some of the second set of the plurality of recesses; and d) separating the pattern support layer from the surface of the die form such that the first curable material and second curable material in the covered recesses are removed from said recesses and retained on the pattern support layer in accordance with the pattern; the method further comprising the step of b') curing, at least partly, the first curable material and the second curable material in one or more steps during and/or after step b).
Clause 2. The method according to clause 1, further comprising the step of: b") removing from the surface of the die form substantially all of the first curable material and/or the second curable material not in the first or second sets of the plurality of recesses in one or more steps during and/or after step b), but before step c).
Clause 3. The method according to any of the preceding clauses, wherein the die form is a substantially cylindrical roller.
Clause 4. The method according to any of the preceding clauses, wherein applying the first curable material to the surface of the die form is performed before applying the second curable material to the surface of the die form.
Clause 5. The method according to at least clause 4, wherein step b) comprises, in order: b) i) applying a first curable material to the surface of the die form such that said first curable material is received in a first set of the plurality of recesses; b") i) removing from the surface of the die form substantially all of the first curable material not in the first set of the plurality of recesses; b') i) curing, at least partly, the first curable material; b) ii) applying a second curable material to the surface of the die form such that said second curable material is received in a second set of the plurality of recesses; b") ii) removing from the surface of the die form substantially all of the second curable material not in the second set of the plurality of recesses; b') ii) curing, at least partly, the second curable material.
Clause 6. The method according to clause 4 or clause 5, wherein the first curable material is applied to the surface of the die form by a first curable material application system, and wherein the second curable material is applied to the surface of the die form by a second curable material application system.
Clause 7. The method according to clause 6, wherein the first curable material application system comprises a first patterned material carrier, wherein the surface of the first patterned material carrier has first and second sub-areas, the characteristics of the surface of the first patterned material carrier being different in the first and second sub-areas, and wherein the first patterned material carrier applies the first curable material to the surface of the die form in accordance with the first sub-area of the surface of the first patterned material carrier.
Clause 8. The method according to any of clauses 1 to 3, further comprising the step of a') providing an intermediate material carrier having a surface; wherein the first curable material is applied to the surface of the intermediate material carrier, wherein the second curable material is applied to the surface of the intermediate material carrier, and wherein the first curable material and the second curable material are applied to the surface of the die form from the surface of the intermediate material carrier.
Clause 9. The method according to clause 8, wherein the first curable material is applied to the surface of the intermediate material carrier by a first curable material application system, and wherein the second curable material is applied to the surface of the intermediate material carrier by a second curable material application system.
Clause 10. The method according to clause 8 or clause 9, wherein the intermediate material carrier is an offset roller.
Clause 11. The method according to any of clauses 8 to 10, wherein the first curable material application system comprises a first patterned material carrier, wherein the surface of the first patterned material carrier has first and second sub-areas, the characteristics of the surface of the first patterned material carrier being different in the first and second sub-areas, and wherein the first patterned material carrier applies the first curable material to the surface of the intermediate material carrier in accordance with the first sub-area of the surface of the first patterned material carrier.
Clause 12. The method according to clause any of the preceding clauses, wherein the first and/or second curable materials are applied using flexographic printing, gravure printing, lithographic printing, offset gravure printing, and/or offset lithographic printing.
Clause 13. The method according to any of the preceding clauses, wherein the first curable material and the second curable material are applied to the surface of the die form substantially in register with one another.
Clause 14. The method according to any of the preceding clauses, wherein step b) further comprises applying a third curable material to the surface of the die form such that said third curable material is received in a third set of the plurality of recesses.
Clause 15. The method according to any of the preceding clauses, wherein at least one of the plurality of recesses has a width of less than 50 µm, preferably less than 10 µm, more preferably less than 5 µm, and most preferably between about 1 to 3 µm.
Clause 16. The method according to any of the preceding clauses, wherein the plurality of recesses define an image element pattern or a microimage element pattern.
Clause 17. The method according to clause 16, wherein the plurality of recesses define the microimage element pattern, and wherein each of the plurality of recesses or a group of the plurality of recesses corresponds to a microimage element of the microimage element pattern.
Clause 18. The method according to any of the preceding clauses, wherein the pattern support layer is substantially transparent or translucent.
Clause 19. The method according to any of the preceding clauses, wherein the pattern support layer is a curable pattern support layer, and wherein the method further comprises curing, at least partly, the curable pattern support layer in one or more steps after step c).
Clause 20. The method according to clause 19, wherein curing, at least partly, the curable pattern support layer also cures, at least partly, at least one of the first curable material and the second curable material.
Clause 21. The method according to any of the preceding clauses, wherein step c) further comprises pressing the pattern support layer against the surface of the die form.
Clause 22. The method according to clause 21, wherein pressing the pattern support layer against the surface of the die form is performed by a backing roller and/or an impression roller.
Clause 23. The method according to any of the preceding clauses, wherein the first curable material has a first set of optical properties, and wherein the second curable material has a second set of optical properties different from the first set of optical properties.
Clause 24. The method according to clause 23, wherein the first curable material appears a first colour when viewed on the pattern support layer in reflected light and/or transmitted light, and wherein the second curable material appears a second colour when viewed on the pattern support layer in reflected light and/or transmitted light.
Clause 25. The method according to any of the preceding clauses, wherein the first curable material and/or the second curable material are resins and/or inks, and/or comprise luminescent, phosphorescent, fluorescent, magnetic, thermochromic, photochromic, iridescent, metallic, optically variable and/or pearlescent pigments.
Clause 26. The method according to any of the preceding clauses, wherein curing at least one of the first curable material, the second curable material and, if provided, the curable pattern support layer comprises curing by exposure to radiation, and preferably by exposure to UV radiation.
Clause 27. The method according to any of the preceding clauses, further comprising the step of c') bringing a substrate layer in contact with a first side of the pattern support layer, either before, during or after step c), the pattern support layer being retained on the substrate layer; wherein the first curable material and second curable material are retained on a second side of the pattern support layer, the second side of the pattern support layer being opposite the first side of the pattern support layer.
Clause 28. The method according to clause 27, wherein the substrate layer is a pre-primed substrate layer.
Clause 29. The method according to any of clauses 1 to 26, wherein the pattern support layer is a substrate layer suitable for use as a security document substrate.
Clause 30. The method according to any of the preceding clauses, wherein the pattern support layer is a continuous web and/or if provided, the substrate layer is a continuous web.
Clause 31. The method according to at least clause 3, wherein the pattern support layer is a material substantially continuously applied to the surface of the die form.
Clause 32. The method according to at least clause 3, wherein the first curable material and/or the second curable material are substantially continuously applied to the surface of the die form.
Clause 33. A method of forming a pattern of at least two different materials in a substrate layer, comprising the steps of: a) providing a substrate layer, the substrate layer having, on a first side of the substrate layer, a surface comprising a plurality of recesses defining the pattern; b) applying a first material to the surface of the substrate layer such that said first material is received in a first set of the plurality of recesses; andm applying a second material to the surface of the substrate layer such that said second material is received in a second set of the plurality of recesses; and c) securing the first material in the first set of the plurality of recesses and the second material in the second set of the plurality of recesses such that said first material and said second material are optically detectable from the first side of the substrate layer or from a second side of the substrate layer opposite to the first side of the substrate layer.
Clause 34. The method according to clause 33, wherein the first material and/or the second material are curable, and wherein securing the first material in the first set of the plurality of recesses and the second material in the second set of the plurality of recesses comprises curing, at least partially, the first material and/or curing, at least partially, the second material in one or more steps during or after step b).
Clause 35. The method according to clause 33 or clause 34, wherein securing the first material in the first set of the plurality of recesses and the second material in the second set of the plurality of recesses comprises applying a sealing layer to the first side of the substrate layer such that it covers the plurality of recesses.
Clause 36. The method according to any of clauses 33 to 35, wherein either or both of the substrate layer and the sealing layer are substantially transparent or translucent such that the first material and the second material are optically detectable through said substantially transparent or translucent substrate layer and/or sealing layer.
Clause 37. The method according to any of clauses 33 to 36, further comprising the step of: b') removing from the surface of the substrate layer substantially all of the first material and/or the second material not in the first or second sets of the plurality of recesses in one or more steps during and/or after step b).
Clause 38. The method according to any of clauses 33 to 37, wherein applying the first material to the surface of the substrate layer is performed before applying the second material to the surface of the substrate layer.
Clause 39. The method according to any of clauses 33 to 38, wherein step b) comprises, in order: b) i) applying a first material to the surface of the substrate layer such that said first material is received in a first set of the plurality of recesses; b') i) removing from the surface of the substrate layer substantially all of the first material not in the first set of the plurality of recesses; b) ii) applying a second material to the surface of the substrate layer such that said second material is received in a second set of the plurality of recesses; and b') i) removing from the surface of the substrate layer substantially all of the second material not in the second set of the plurality of recesses.
Clause 40. The method according to clause 39 when dependent on at least clause 34, wherein step c) comprises: c) i) curing, at least partly, the first material after step b') i) and before step b) ii); and c) ii) curing, at least partly, the second material after step b') i).
Clause 41. The method according to any of clauses 38 to 40, wherein the first material is applied to the surface of substrate layer by a first material application system, and wherein the second material is applied to the surface of the substrate layer by a second material application system.
Clause 42. The method according to clause 41, wherein the first material application system comprises a first patterned material carrier, wherein the surface of the first patterned material carrier has first and second sub-areas, the characteristics of the surface of the first patterned material carrier being different in the first and second sub-areas, and wherein the first patterned material carrier applies the first material to the surface of the die form in accordance with the first sub-area of the surface of the first patterned material carrier.
Clause 43. The method according to any of clauses 33 to 37, further comprising the step of a') providing an intermediate material carrier having a surface; wherein the first material is applied to the surface of the intermediate material carrier, wherein the second material is applied to the surface of the intermediate material carrier, and wherein the first material and the second material are applied to the surface of the substrate layer from the surface of the intermediate material carrier.
Clause 44. The method according to clause 43, wherein the first material is applied to the surface of the intermediate material carrier by a first material application system, and wherein the second material is applied to the surface of the intermediate material carrier by a second material application system.
Clause 45. The method according to clause 43 or clause 44, wherein the intermediate material carrier is an offset roller.
Clause 46. The method according to any of clauses 43 to 45, wherein the first material application system comprises a first patterned material carrier, wherein the surface of the first patterned material carrier has first and second sub-areas, the characteristics of the surface of the first patterned material carrier being different in the first and second sub-areas, and wherein the first patterned material carrier applies the first curable material to the surface of the intermediate material carrier in accordance with the first sub-area of the surface of the first patterned material carrier.
Clause 47. The method according to any of clauses 33 to 46, wherein the first and/or second materials are applied using flexographic printing, gravure printing, lithographic printing, offset gravure printing, and/or offset lithographic printing.
Clause 48. The method according to any of clauses 33 to 48, wherein the first material and the second material are applied to the surface of the substrate layer substantially in register with one another.
Clause 49. The method according to any of clauses 33 to 48, wherein step b) further comprises applying a third material to the surface of the substrate layer such that said third material is received in a third set of the plurality of recesses.
Clause 50.m The method according to any of clauses 33 to 49, wherein at least one of the plurality of recesses has a width of less than 50 µm, preferably less than 10 µm, more preferably less than 5 µm, and most preferably between about 1 to 3 µm.
Clause 51. The method according to any of clauses 33 to 50, wherein the plurality of recesses define an image element pattern or a microimage element pattern.
Clause 52. The method according to clause 51, wherein the plurality of recesses define the microimage element pattern, and wherein each of the plurality of recesses or a group of the plurality of recesses corresponds to a microimage element of the microimage element pattern.
Clause 53. The method according to any of clauses 33 to 52, wherein the first material has a first set of optical properties, and wherein the second material has a second set of optical properties different from the first set of optical properties.
Clause 54. The method according to clause 53, wherein the first material appears a first colour when viewed in reflected light and/or transmitted light, and wherein the second material appears a second colour when viewed in reflected light and/or transmitted light.
Clause 55. The method according to any of clauses 33 to 54, wherein the first material and/or the second material are resins and/or inks, and/or comprise luminescent, phosphorescent, fluorescent, magnetic, thermochromic, photochromic, iridescent, metallic, optically variable and/or pearlescent pigments.
Clause 56. The method according to at least clause 34, wherein curing at least one of the first material and the second material comprises curing by exposure to radiation, and preferably by exposure to UV radiation.
Clause 57. The method according to any of clauses 33 to 56, wherein the substrate layer is a continuous web.
Clause 58. The method according to clause 57, wherein the first material and/or the second material are substantially continuously applied to the surface of the substrate layer.
Clause 59. The method according to any of clauses 33 to 58, wherein step a) comprises: a) i) providing a substrate layer, the substrate layer having, on a first side of the substrate layer, a surface; and a) ii) forming in the surface a plurality of recesses defining the pattern.
Clause 60. A document of value comprising the pattern support layer having a pattern formed of at least two different materials applied according to any of clauses 1 to 32.
Clause 61. A document of value comprising the substrate layer having a pattern of at least two different materials formed according to any of clauses 33 to 59.
Clause 62. The document of value according to clause 60 or clause 61, wherein the document of values is a banknote, cheque, passport, identity card, certificate of authenticity, or fiscal stamp.
Clause 63. A security element comprising the pattern support layer having a pattern formed of at least two different materials applied according to any of clauses 1 to 32.
Clause 64. A security element comprising the substrate layer having a pattern of at least two different materials formed according to any of clauses 33 to 59.

## Claims

1. A method of forming a pattern of at least two different materials in a substrate layer, comprising the steps of:
a) providing a substrate layer, the substrate layer having, on a first side of the substrate layer, a surface comprising a plurality of recesses defining the pattern;
b) applying a first material to the surface of the substrate layer such that said first material is received in a first set of the plurality of recesses; and applying a second material to the surface of the substrate layer such that said second material is received in a second set of the plurality of recesses; and
c) securing the first material in the first set of the plurality of recesses and the second material in the second set of the plurality of recesses such that said first material and said second material are optically detectable from the first side of the substrate layer or from a second side of the substrate layer opposite to the first side of the substrate layer.

2. The method according to claim 1, wherein the first material and/or the second material are curable, and wherein securing the first material in the first set of the plurality of recesses and the second material in the second set of the plurality of recesses comprises curing, at least partially, the first material and/or curing, at least partially, the second material in one or more steps during or after step b), wherein curing at least one of the first material and the second material preferably comprises curing by exposure to radiation, and preferably by exposure to UV radiation.

3. The method according to claim 1 or claim 2, wherein securing the first material in the first set of the plurality of recesses and the second material in the second set of the plurality of recesses comprises applying a sealing layer to the first side of the substrate layer such that it covers the plurality of recesses.

4. The method according to any of claims 1 to 3, further comprising the step of:
b') removing from the surface of the substrate layer substantially all of the first material and/or the second material not in the first or second sets of the plurality of recesses in one or more steps during and/or after step b).

5. The method according to any of claims 1 to 4, wherein applying the first material to the surface of the substrate layer is performed before applying the second material to the surface of the substrate layer.

6. The method according to any of claims 1 to 5, wherein step b) comprises, in order:
b) i) applying a first material to the surface of the substrate layer such that said first material is received in a first set of the plurality of recesses;
b') i) removing from the surface of the substrate layer substantially all of the first material not in the first set of the plurality of recesses;
b) ii) applying a second material to the surface of the substrate layer such that said second material is received in a second set of the plurality of recesses; and
b') i) removing from the surface of the substrate layer substantially all of the second material not in the second set of the plurality of recesses.

7. The method according to claim 6 when dependent on at least claim 2, wherein step c) comprises:
c) i) curing, at least partly, the first material after step b') i) and before step b) ii); and
c) ii) curing, at least partly, the second material after step b') i).

8. The method according to any of claims 5 to 7, wherein the first material is applied to the surface of substrate layer by a first material application system, and wherein the second material is applied to the surface of the substrate layer by a second material application system, wherein preferably the first material application system comprises a first patterned material carrier, wherein the surface of the first patterned material carrier has first and second sub-areas, the characteristics of the surface of the first patterned material carrier being different in the first and second sub-areas, and wherein the first patterned material carrier applies the first material to the surface of the die form in accordance with the first sub-area of the surface of the first patterned material carrier.

9. The method according to any of claims 1 to 4, further comprising the step of
a') providing an intermediate material carrier, preferably an offset roller, having a surface;
wherein the first material is applied to the surface of the intermediate material carrier, wherein the second material is applied to the surface of the intermediate material carrier, and wherein the first material and the second material are applied to the surface of the substrate layer from the surface of the intermediate material carrier, wherein preferably the first material is applied to the surface of the intermediate material carrier by a first material application system, and wherein the second material is applied to the surface of the intermediate material carrier by a second material application system.

10. The method according to any of claims 1 to 9, wherein the first and/or second materials are applied using flexographic printing, gravure printing, lithographic printing, offset gravure printing, and/or offset lithographic printing.

11. The method according to any of claims 1 to 10, wherein the first material and the second material are applied to the surface of the substrate layer substantially in register with one another.

12. The method according to any of claims 1 to 11, wherein at least one of the plurality of recesses has a width of less than 50 µm, preferably less than 10 µm, more preferably less than 5 µm, and most preferably between about 1 to 3 µm.

13. The method according to any of claims 1 to 12, wherein the plurality of recesses define an image element pattern or a microimage element pattern, wherein preferably the plurality of recesses define the microimage element pattern, and wherein each of the plurality of recesses or a group of the plurality of recesses corresponds to a microimage element of the microimage element pattern.

14. The method according to any of claims 1 to 13, wherein the first material has a first set of optical properties, and wherein the second material has a second set of optical properties different from the first set of optical properties, wherein preferably the first material appears a first colour when viewed in reflected light and/or transmitted light, and wherein the second material appears a second colour when viewed in reflected light and/or transmitted light.

15. A document of value comprising the substrate layer having a pattern of at least two different materials formed according to any of claims 1 to 14, wherein the document of values is preferably a banknote, cheque, passport, identity card, certificate of authenticity, or fiscal stamp.
